**Europäisches Patentamt**

**European Patent Office**

**Office européen des brevets**

(19)

(11) Veröffentlichungsnummer: **0 327 727 B1**

(12) # EUROPÄISCHE PATENTSCHRIFT

(45) Veröffentlichungstag der Patentschrift :
03.07.91 Patentblatt 91/27

(51) Int. Cl.⁵ : **B60J 1/17**

(21) Anmeldenummer : **88121749.1**

(22) Anmeldetag : **28.12.88**

(54) **Führungseinrichtung für eine in der Höhe verstellbare Fensterscheibe.**

(30) Priorität : 03.02.88 DE 3803118

(43) Veröffentlichungstag der Anmeldung :
16.08.89 Patentblatt 89/33

(45) Bekanntmachung des Hinweises auf die
Patenterteilung :
03.07.91 Patentblatt 91/27

(84) Benannte Vertragsstaaten :
DE FR GB IT SE

(56) Entgegenhaltungen :
EP-A- 0 183 206
US-A- 2 992 039
US-A- 4 788 794

(73) Patentinhaber : **Dr.Ing.h.c. F. Porsche**
**Aktiengesellschaft**
**Porschestrasse 42**
**W-7000 Stuttgart 40 (DE)**

(72) Erfinder : **Srock, Rainer**
**Im Greutle**
**W-7251 Warmbronn (DE)**
Erfinder : **Brettmann, Jörg, Dipl.-Ing.**
**Gerlinger Strasse 16**
**W-7250 Leonberg (DE)**
Erfinder : **Eger, Georg**
**Wilhelm-Busch-Strasse 23**
**W-7143 Hochdorf/Vaihingen (DE)**

Jouve, 18, rue Saint-Denis, 75001 PARIS

## Beschreibung

Die Erfindung bezieht sich auf eine Führungseinrichtung für eine gewölbte, in der Höhe verstellbare Fensterscheibe, insbesondere von Fahrzeugtüren, wobei an einem unteren Randbereich der Fensterscheibe zwei mit Abstand zueinander angeordnete Halteteile mit je einem oberen und einem unteren Gleitstück vorgesehen sind, die mit U-förmig profilierten Führungsbahnen von im Türkörper angebrachten Führungsschienen in Wirkverbindung stehen.

Bei einer bekannten Führungseinrichtung der eingangs genannten Gattung (DE-B-1 210 691) ist benachbart der aufrecht verlaufenden Seitenkanten der Fensterscheibe je eine Führungsschiene mit einer U-förmig profilierten Führungsbahn angeordnet, wobei die beiden – in Höhenrichtung gesehen – mit Abstand zueinander verlaufenden Gleitstücke jedes Halteteiles mit der gemeinsamen Führungsbahn zusammenwirken. Die beiden Führungsschienen umgreifen dabei den vorderen und hinteren Rand der Fensterscheibe.

Dieser Führungseinrichtung haftet der Nachteil an, daß sie nur für eine solche Fensterscheibe geeignet ist, die in ihrer Schließstellung etwa parallel zu einem Innenblech des darunterliegenden Türkörpers verläuft. Für Fensterscheiben, die gegenüber dem darunterliegenden Türkörper eine starke Seitenfallung aufweisen, dürfte diese Führungseinrichtung nur schwerlich geeignet sein. Ferner wird durch die festgelegte Lage der Führungsschienen die freie Gestaltung des Türkörpers – insbesondere im Bereich des Türschlosses – stark eingeschränkt.

Aufgabe der Erfindung ist es, insbesondere für eine rahmenlos geführte Fensterscheibe mit einer starken Seitenfallung zum darunterliegenden Türkörper eine Führungseinrichtung zu schaffen, die bei einfachem Aufbau eine funktionsgerechte Halterung der Fensterscheibe in sämtlichen Stellungen gewährleistet. Außerdem sollte die freie Gestaltung des Türkörpers im Schloßbereich nicht beeinträchtigt werden.

Erfindungsgemäß wird diese Aufgabe durch die kennzeichnenden Merkmale des Anspruchs 1 gelöst. Weitere vorteilhafte Ausführungsformen der Erfindung enthalten die Unteransprüche.

Die mit der Erfindung hauptsächlich erzielten Vorteile sind darin zu sehen, daß durch die gegenüberliegende Anordnung der Beiden Führungsbahnen jeder Führungsschiene und der Gleitstücke jedes Halteteiles eine funktionsgerechte Abstützung der Fensterscheibe in Fahrzeugquer- und Fahrzeuglängsrichtung in sämtliche Stellungen der Fensterscheibe gewährleistet wird. Durch den unterschiedlichen, versetzten Formverlauf der Führungsbahnen ist diese Führungseinrichtung insbesondere für Fensterscheiben geeignet, die eine starke Seitenfallung gegenüber dem darunterliegenden Türkörper aufweisen. Ferner können die Halteteile an beliebiger Stelle an der Fensterscheibe befestigt werden, d.h., die zugehörigen Führungsschienen müssen nicht unbedingt am Seitenrand der Scheibe angebracht werden, wo Bauraum für das Türschloß benötigt wird.

Die Halteteile und die Führungsschienen sind einfach herstellbar und lassen sich leicht in die Tür montieren. Durch die Integration eines Fensterhebers in die Führungseinrichtung wird eine kompakte Bauweise erzielt. Ferner wird durch diese Führungseinrichtung ein minimaler Abstand der Fensterscheibe zur angrenzenden Außenkontur des Fahrzeuges erreicht (geringer Luftwiderstandsbeiwert). Darüber hinaus wird die Türscheibe im Fahrbetrieb durch die auftretenden Sogkräfte an die Dichtung des Mittelsteges gezogen, wodurch die Dichtigkeit erhöht wird. Bei minimalem Absenken der Türscheibe wird aufgrund des Formverlaufes der Führungsbahnen eine gute Entlüftung des Fahrzeuginnenraumes gewährleistet, da sich der vordere Rand der Fensterscheibe vom Mittelsteg wegbewegt und eine Spaltöffnung bildet.

Ein Ausführungsbeispiel der Erfindung ist in der Zeichnung dargestellt und wird im folgenden näher erläutert.

Es zeigt

Fig. 1 eine Seitenansicht einer Kraftfahrzeugtür mit einer Führungseinrichtung für eine höhenverstellbare Fensterscheibe,

Fig. 2 einen Schnitt nach der Linie II-II der Fig. 1 in größerem Maßstab,

Fig. 3 einen Schnitt nach der Linie III-III der Fig. 2 in größerem Maßstab,

Fig. 4 einen Schnitt nach der Linie IV-IV der Fig. 3 in größerem Maßstab,

Fig. 5 einen Schnitt nach der Linie V-V der Fig. 3 in größerem Maßstab.

Fig. 6 eine Einzelheit X der Fig. 1 in größerem Maßstab.

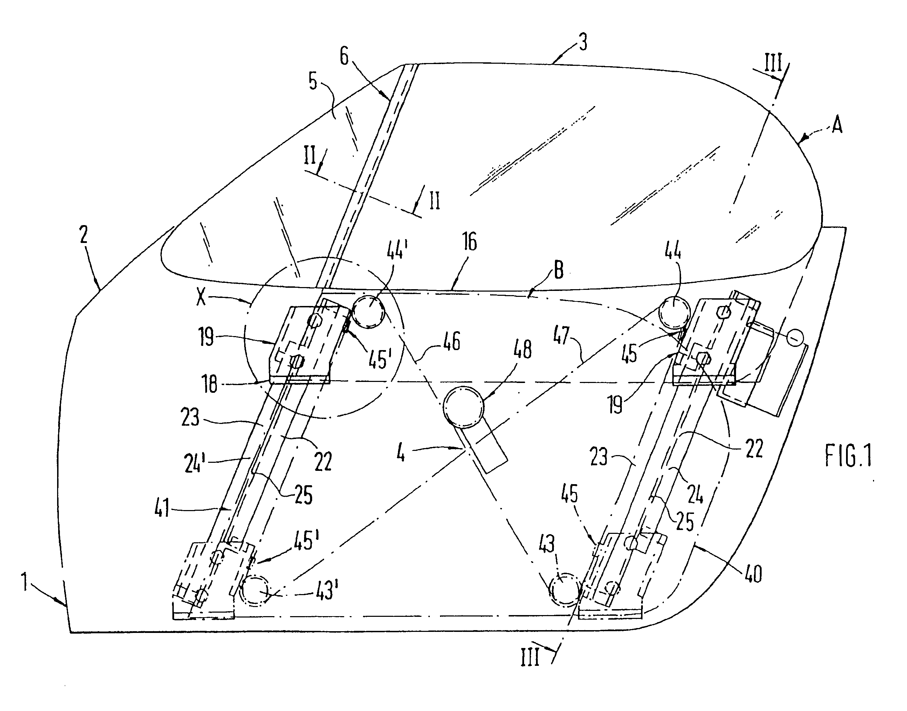

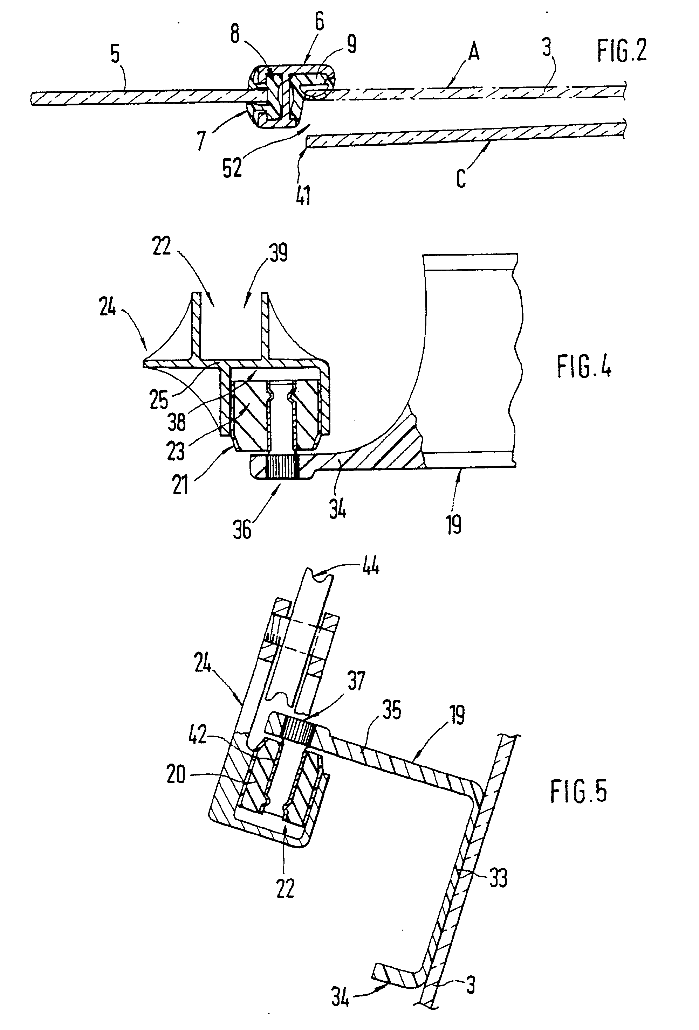

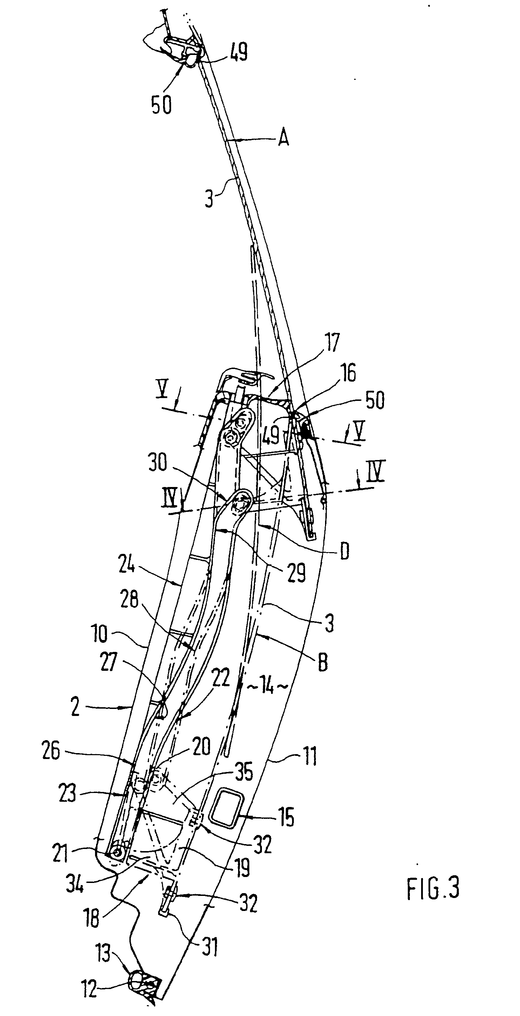

Fig. 1 zeigt eine Fahrzeugtür 1 eines Sportwagens oder eines Coupés. Im Türkörper 2 ist eine rahmenlose Fensterscheibe 3 heb- und senkbar angeordnet, und zwar mittels eines Fensterhebers 4. Ferner umfaßt die Fahrzeugtür 1 ein feststehendes Dreiecksfenster 5, das auf der der Fensterscheibe 3 gegenüberliegenden Seite eines aufrechten Mittelsteges 6 der Fahrzeugtür 1 angeordnet ist. Das Dreiecksfenster 5 ist mittels eines Gummiprofiles 7 in eine etwa U-förmige Aufnahme 8 des Mittelsteges 6 eingesetzt (Fig. 2). Die Fensterscheibe 3 liegt lediglich in ihrer vollständig hochgefahrenen Schließstellung A unter Vorspannung an einem Dichtkörper 9 des Mittelsteges 6 an. Beim Absenken der Fensterscheibe 3 bewegt sich diese vom Mittelsteg 6 bzw. vom Dichtkörper 9 weg und wandert nach außen (z.B. Zwischenstellung C).

Der Türkörper 2 setzt sich aus einem Türinnenblech 10 und einem Türaußenlech 11 zusammen, die in einem Teilbereich ihres Umfangs unter Bildung einer U-förmigen Rinne 12 fest miteinander verbunden sind (Fig. 3). In die Rinne 12 ist ein Türdichtungsprofil 13 eingesetzt. In einem unteren Bereich des Türkörpers 2 ist innerhalb eines Türschachtes 14 eine rohrförmige Türverstärkung 15 angeordnet. Das Türaußenblech 11 weist entlang seiner Höhenerstreckung eine relativ stark gekrümmte Form auf. Im Bereich einer Gürtellinie 16 ist an der Fahrzeugtür 1 eine Türschachtöffnung 17 zum Hindurchführen der Fensterscheibe 3 vorgesehen, wobei die Türschachtöffnung 17 wegen der starken Seitenfallung (Einzug) von Fensterscheibe 3 und Fahrzeugtür 1 eine relativ große Breite aufweist. Bei abgesenkter Fensterscheibe 3 ist die Türschachtöffnung 17 von zwei Dichtungsprofilen verschlossen, wobei die beiden Dichtungsprofile an gegenüberliegenden Seiten der Fensterscheibe 3 zugeordnet sind.

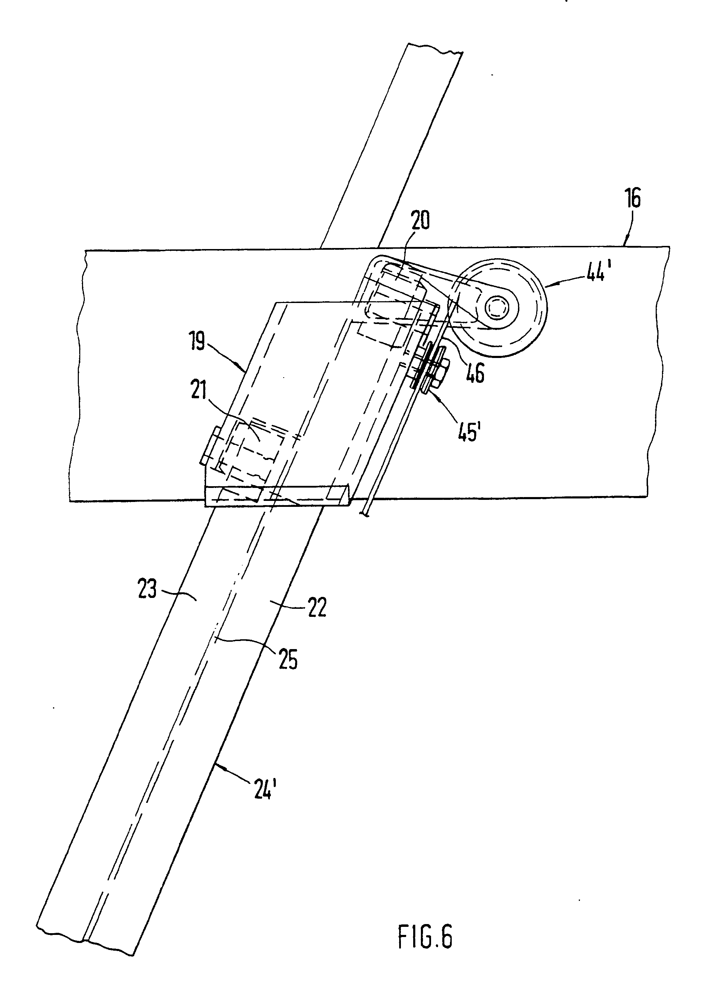

Innerhalb des Türkörpers 2 ist im Türschacht 14 eine Führungseinrichtung 18 für die gewölbte, höhenverstellbare Fensterscheibe 3 vorgesehen. Die Führungseinrichtung 18 umfaßt zwei am unteren Randbereich der Fensterscheibe 3 angeordnete Halteteile 19 mit je einem oberen Gleitstück 20 und einem unteren Gleitstück 21. Die beiden Gleitstücke 20, 21 jedes Halteteiles 19 wirken mit Führungsbahnen 22, 23 von Führungsschienen 24, 24' zusammen (Fig. 6).

Gemäß Fig. 1 ist an jeder Fahrzeugtür 1 eine vordere Führungsschiene 24' und eine hintere Führungsschiene 24 vorgesehen, wobei die beiden parallel zueinander ausgerichteten und schrägverlaufenden Führungschienen 24, 24' in nicht näher dargestellter Weise am Türkörper 2 befestigt sind. Entsprechend Fig. 1 sind an jeder Führungsschiene 24, 24' zwei Führungsbahnen 22, 23 ausgebildet, wobei das obere Gleitstück 20 mit der ersten Führungsbahn 22 und das untere Gleitstück 21 mit der zweiten Führungsbahn 23 zusammenwirkt. Die Führungsbahnen 22, 23 jeder Führungsschiene 24, 24' sowie die Gleitstücke 20, 21 des dazugehörigen Halteteiles 19 sind an gegenüberliegenden Längsseiten eines quer zur Fahrzeuglängsrichtung verlaufenden, gemeinsamen Verbindungssteges 25 der Führungsschiene 24, 24' angeordnet.

Die beiden U-förmig profilierten Führungsbahnen 22, 23 jeder Führungsschiene 24, 24' sind in Höhen- und in Fahrzeugquerrichtung versetzt zueinander angeordnet (Fig. 3). Die erste Führungsbahn 22 erstreckt sich – in Höhenrichtung gesehen – etwa von der obenliegenden Türschachtöffnung 17 bis zur Türverstärkung 15. Die zweite Führungsbahn 23 ist um das Maß E nach unten zur ersten Führungsbahn 22 versetzt. Die beiden Führungsbahnen 22, 23 jeder Führungsschiene 24, 24' weisen entlang ihrer Längserstreckung einen unterschiedlichen Formverlauf auf. Der Formverlauf der Führungsbahnen 22, 23 ist von der Seitenfallung von Fensterscheibe 3 und Türkörper 2 abhängig und muß jeweils experimentell ermittelt werden.

Jede Führungsbahn 22, 23 weist jeweils einen schrägverlaufenden, geradlinigen unteren Endbereich 26 auf, der über einen radienförmigen Übergangsbereich 27 in einen daran anschließenden, nach außen hin gekrümmten mittleren Bereich 28 übergeht. Der mittlere Bereich 28 setzt sich über einen weiteren radienförmigen Übergangsbereich 29 in einen sehr flach nach außen hin auslaufenden Endbereich 30 fort. Die Länge der einzelnen Bereiche sowie die Krümmung des mittleren Bereiches 28 sind bei den einzelnen Führungsbahnen 22, 23 unterschiedlich ausgebildet.

Jedes Halteteil 19 umgreift mit einem U-förmigen Aufnahmeabschnitt 31 den unteren Rand der Fensterscheibe 3 und ist über Befestigungsschrauben 32 mit der Fensterscheibe 3 verbunden. Die Befestigungsschrauben 32 sind durch Öffnungen der Fensterscheibe 3 hindurchgeführt (Fig. 3).

Gemäß Fig. 5 umfaßt das Halteteil 19 ein parallel zur Fensterscheibe 3 verlaufendes Mittelteil 33, wobei von jedem freien Ende des Mittelteiles 33 ein etwa rechtwinklig dazu verlaufender Schenkel 34, 35 weggeführt ist. Benachbart den freien Enden 36, 37 der Schenkel 34, 35 sind die beiden Gleitstücke 20, 21 angeordnet. Die Gleitstücke 20, 21 sind etwa parallel zur Fensterscheibe 3 ausgerichtet und jeweils zu den offenen Seiten 38, 39 der Führungsbahnen 23 gerichtet. Das Gleitstück 20 ist dem Schenkel 35 und das Gleitstück 21 dem Schenkel 34 zugeordnet.

Die beiden Schenkel 34, 35 des Halteteiles 19 weisen eine unterschiedliche Form auf und sind in Höhenrichtung versetzt zueinander angeordnet (Fig. 3). Die Halteteile 19 können in Längsrichtung gesehen, an beliebiger Stelle an der Fensterscheibe 3 befestigt werden, d.h., sie brauchen nicht zwangsläufig an den aufrecht verlaufenden Längsseiten 40, 41 der Fensterscheibe 3 angeordnet werden, sondern können auch mit Abstand zu den Längsseiten 40, 41 verlaufen.

Der das untere Gleitstück 21 tragende Schenkel 34 ist etwa L-förmig profiliert, wogegen der andere Schenkel 35 annähernd trapezförmig ausgebildet ist. Die oberen und unteren Gleitstücke 20, 21 sind identisch ausgebildet und aus Kunststoff hergestellt. Die etwa eine ovale Form aufweisenden Gleitstücke 20, 21 sind auf einen Rohrabschnitt 42 aufgeklipst, der senkrecht von den Schenkeln 34, 35 des Halteteiles 19 weggeführt ist. Durch den relativ großen Höhenversatz der Gleitstücke 20, 21 wird eine gute Halterung der rahmenlosen Fensterscheibe 3 in sämtlichen Stellungen gewährleistet.

Eine besonders kompakte Bauweise der Führungseinrichtung 18 und des Fensterhebers 4 wird dadurch erreicht, daß der Fensterheber 4 zumindest teilweise in die Führungseinrichtung 18 integriert ist. Im Ausführungsbeispiel ist der Fensterheber 4 als Seilfensterheber ausgebildet, dessen Seil- bzw. Umlenkrollen an den beiden Führungsschienen 24, 24' und an den Halteteilen 19 drehbar gelagert sind.

Am unteren und am oberen Rand der Führungsschienen 24, 24' ist jeweils eine Umlenkrolle 43, 44, 43', 44' angeordnet, deren Drehachsen in Fahrzeugquerrichtung verlaufen. Ferner sind an jedem Halteteil 19 eine oder zwei seilrollen 45, 45' angeordnet, deren Drehachsen etwa rechtwinklig zu den Schenkeln 34, 35 des Halteteiles 19 ausgerichtet sind. Die Seilrollen 45, 45' nehmen die nicht näher dargestellten ösenförmigen Endbereiche der beiden Zugseile 46, 47 des Seilfensterhebers auf.

Das Zugseil 46 erstreckt sich von der obenliegenden Seilrolle 45 über die benachbarte Umlenkrolle 44' diagonal zur gegenüberliegenden Umlenkrolle 43 und wieder zur angrenzenden unteren Seilrolle 45. Zumindest ein Zugseil 46, 47 wirkt mit einer manuellen oder elektrischen Antriebseinrichtung 48 zusammen.

Bei vollständig abgesenkter Fensterscheibe 3 (Stellung B) befinden sich die beiden Halteteile 19 in einem unteren Bereich des Türkörpers 2, und zwar benachbart der Türverstärkung 15, wobei die Gleitstücke 20, 21 teilweise aus den nach unten hin offenen Führungsbahnen 22, 23 hervorstehen. In dieser Stellung B liegt die Fensterscheibe 3 verdeckt innerhalb des Türkörpers 2, wobei der obere Scheibenrand 49 abschnittsweise am benachbarten Dichtungsprofil anliegt.

In Fig. 2 ist eine weitere Zwischenstellung D der Fensterscheibe 3 strichpunktiert dargestellt.

In der vollständig hochgefahrenen Schließstellung A der Fensterscheibe 3 verlaufen beide Gleitstücke 20, 21 angrenzend an die oberen geschlossenen Enden der Führungsbahnen 22, 23. Der obere Scheibenrand 49 wirkt in der Schließstellung A unter Vorspannung mit einem dachseitig angeordneten Führungsprofil 50 zusammen, wobei die Fensterscheibe 3 annähernd außenhautbündig zur angrenzenden Karosseriekontur verläuft.

Schon bei geringem Absenken der Fensterscheibe 3 (etwa 20 mm Hub) bewegt sich die vordere Längskante 41 in Querrichtung gesehen soweit nach außen, daß zwischen Mittelsteg 6 und Längskante 41 eine ausreichend große Spaltöffnung 52 geschaffen wird, durch die eine gute Fahrgastraumlüftung ermöglicht wird (Zwischenstellung C der Fensterscheibe 3 in Fig. 2).

**Ansprüche**

1. Führungseinrichtung für eine gewölbte, in der Höhe verstellbare Fensterscheibe (3), insbesondere von Fahrzeugtüren (1), wobei an einem unteren Randbereich der Fensterscheibe (3) zwei mit Abstand zueinander angeordnete Halteteile (19) mit je einem oberen (20) und einem unteren (21) Gleitstück vorgesehen sind, die mit U-förmig profilierten Führungsbahnen (22, 23) von im Türkörper (2) angebrachten Führungsschienen (24, 24') in Wirkverbindung stehen, dadurch gekennzeichnet, daß an jeder Führungsschiene (24, 24') zwei Führungsbahnen (22, 23) ausgebildet sind, wobei das obere Gleitstück (20) mit der ersten Führungsbahn (22) und das untere Gleitstück (21) mit der zweiten Führungsbahn (23) zusammenwirkt und daß die Führungsbahnen (22, 23) einer Führungsschiene (24, 24') sowie die Gleitstücke (20, 21) jedes Halteteiles (19) auf gegenüberliegenden Längsseiten eines quer zur Fahrzeuglängsrichtung verlaufenden, gemeinsamen Verbindungssteges (25) der Führungsschiene (24, 24') angeordnet sind.

2. Führungseinrichtung nach Anspruch 1, dadurch gekennzeichnet, daß die beiden Führungsbahnen (22, 23) jeder Führungsschiene (24, 24') in Höhenrichtung und in Fahrzeugquerrichtung versetzt zueinander angeordnet sind.

3. Führungseinrichtung nach Anspruch 1, dadurch gekennzeichnet, daß die beiden Führungsbahnen (22, 23) jeder Führungsschiene (24, 24') entlang ihrer Längserstreckung einen unterschiedlichen Formverlauf aufweisen.

4. Führungseinrichtung nach Anspruch 3, dadurch gekennzeichnet, daß sich jede Führungsbahn (22, 23) aus einem schrägverlaufenden, geradlinigen unteren Endbereich (26), einen daran anschließenden, nach außen gekrümmten mittleren Bereich (28) und aus einem flach nach außen hin auslaufenden oberen Endbereich (30) zusammensetzt.

5. Führungseinrichtung nach Anspruch 1, dadurch gekennzeichnet, daß die Führungsschiene (24, 24') aus Kunststoff hergestellt ist.

6. Führungseinrichtung nach Anspruch 1, dadurch gekennzeichnet, daß die Gleitstücke (20, 21) aus einem geeigneten Kunststoff gefertigt sind.

7. Führungseinrichtung nach Anspruch 1, dadurch gekennzeichnet, daß die Halteteile (19) in Längsrichtung gesehen, an beliebiger Stelle an der Fensterscheibe (3) befestigbar sind.

8. Führungseinrichtung nach Anspruch 1, dadurch gekennzeichnet, daß ein Fensterheber (4) in die Führungseinrichtung (18) integriert ist.

9. Führungseinrichtung nach Anspruch 8, dadurch gekennzeichnet, daß an beiden Führungsschienen (24, 24') und an den Halteteilen (19) drehbar gelagerte Seil- bzw. Umlenkrollen (43, 44, 45) eines Seilfensterhebers (4) angeordnet sind.

**Claims**

1. A guide device for an arched window pane (3) adjustable in height, in particular for vehicle doors (1), two holding parts (19) being provided at a lower edge region of the window pane (3), which holding parts (19) are arranged at a distance from each other, each have an upper (20) and a lower (21) slider and are in operative connection with U-shaped guideways (22, 23) of guide rails (24, 24') provided in the door body (2), characterised in that two guideways (22, 23) are formed on each guide rail (24, 24'), the upper slider (20) cooperating with the first guideway (22) and the lower slider (21) cooperating with the second guideway (23), and in that the guideways (22, 23) of a guide rail (24, 24') and the sliders (20, 21) of each holding part (19) are arranged on opposite long sides of a common connecting web (25) of the guide rail (24, 24'), which connecting web (25) extends obliquely in relation to the longitudinal direction of the vehicle.

2. A guide device according to Claim 1, characterised in that the two guideways (22, 23) of each guide rail (24, 24') are arranged offset in relation to each other in the vertical direction and in the transverse direction of the vehicle.

3. A guide device according to Claim 1, characterised in that the two guideways (22, 23) of each guide rail (24, 24') have a different contour along their longitudinal extension.

4. A guide device according to Claim 3, characterised in that each guideway (22, 23) is composed of a rectilinear lower end region (26) extending obliquely, an adjoining middle region (28) curved outwards and an upper end region (30) extending in a flat manner towards the outside.

5. A guide device according to Claim 1, characterised in that the guide rail (24, 24') is manufactured from synthetic material.

6. A guide device according to Claim 1, characterised in that the sliders (20, 21) are produced from a suitable synthetic material.

7. A guide device according to Claim 1, characterised in that the holding parts (19), seen in the longitudinal direction, can be attached at any point to the window pane (3).

8. A guide device according to Claim 1, characterised in that a window lifter (4) is integrated into the guide device (18).

9. A guide device according to Claim 8, characterised in that cable-rope and/or guide pulleys (43, 44, 45) of a cable-rope window lifter (4) are arranged so as to be rotatably mounted on both guide rails (24, 24') and on the holding parts (19).

## Revendications

1. Dispositif de guidage pour une vitre galbée (3) réglable en hauteur, en particulier de portières (1) de véhicule, où l'on prévoit au voisinage du bord inférieur de la vitre (3) deux éléments de retenue (19) placés à distance mutuelle, comportant chacun une pièce coulissante supérieure (20) et une pièce coulissante inférieure (21), qui coopèrent avec des glissières profilées en U (22, 23) de rails de guidage (24, 24') placés dans le corps (2) de la portière, caractérisé en ce que deux glissières (22, 23) sont formées sur chaque rail de guidage (24, 24'), la pièce coulissante supérieure (20) coopérant avec la première glissière (22) et la pièce coulissante inférieure (21) avec la seconde glissière (23), et en ce que les glissières (22, 23) d'un rail de guidage (24, 24'), ainsi que les pièces coulissantes (20, 21) de chaque élément de retenue (19) sont placées sur des côtés longitudinaux opposés d'une entretoise de liaison (25) du rail de guidage (24, 24') commune, s'étendant transversalement à la direction longitudinale du véhicule.

2. Dispositif de guidage selon la revendication 1, caractérisé en ce que les deux glissières (22, 23) de chaque rail de guidage (24, 24') sont décalées l'une de l'autre en direction verticale et dans la direction transversale du véhicule.

3. Dispositif de guidage selon la revendication 1, caractérisé en ce que les deux glissières (22, 23) de chaque rail de guidage (24, 24') présentent une allure différente sur leur étendue longitudinale.

4. Dispositif de guidage selon la revendication 3, caractérisé en ce que chaque glissière (22, 23) comprend une zone terminale inférieure rectiligne (26) dirigée obliquement, une zone centrale (28) courbée vers l'extérieur qui s'y raccorde et une zone terminale supérieure (30) se terminant à plat vers l'extérieur.

5. Dispositif de guidage selon la revendication 1, caractérisé en ce que le rail de guidage (24, 24') est en matière plastique.

6. Dispositif de guidage selon la revendication 1, caractérisé en ce que les pièces coulissantes (20, 21) sont en une matière plastique appropriée.

7. Dispositif de guidage selon la revendication 1, caractérisé en ce que les éléments de retenue (10) peuvent, en observant dans la direction longitudinale, être fixés n'importe où sur la vitre (3).

8. Dispositif de guidage selon la revendication 1, caractérisé en ce qu'un lève-vitre (4) est intégré dans le dispositif de guidage (18).

9. Dispositif de guidage selon la revendication 8, caractérisé en ce que des poulies d'enroulement de câble et de renvoi (43, 44, 45) d'un lève-vitre à câble (4) sont placées de façon à pouvoir tourner sur les deux rails de guidage (24, 24') et sur les éléments de retenue (19).

FIG.1

FIG.2

FIG.4

FIG.5

FIG.3

FIG.6